Europäisches Patentamt

European Patent Office

Office européen des brevets

(11) Veröffentlichungsnummer: **0 095 600**
**A1**

## (12) EUROPÄISCHE PATENTANMELDUNG

(21) Anmeldenummer: **83104504.2**

(22) Anmeldetag: **07.05.83**

(51) Int. Cl.³: **F 03 D 3/06**

(30) Priorität: **08.05.82 DE 3217359**

(43) Veröffentlichungstag der Anmeldung: **07.12.83**
**Patentblatt 83/49**

(84) Benannte Vertragsstaaten: **AT BE CH FR GB IT LI LU NL SE**

(71) Anmelder: **Herter, Erich, Am Pelz, 66, D-6100 Darmstadt (DE)**
Anmelder: **Herter, Gunnar, Am Pelz, 66, D-6100 Darmstadt (DE)**

(72) Erfinder: **Herter, Erich, Am Pelz, 66, D-6100 Darmstadt (DE)**
Erfinder: **Herter, Gunnar, Am Pelz, 66, D-6100 Darmstadt (DE)**

(74) Vertreter: **Wolf, Günter, Dipl.Ing., Mittelweg 12 P.O.B. 180 144, D-6000 Frankfurt/Main (DE)**

(54) **Turbine.**

(57) Die Turbine, insbesondere Windturbine, ist zur Umsetzung der Energie einer frei anströmenden Strömung bestimmt und besteht aus einem um eine vertikale Achse drehbaren Rotor mit Strömungsfangblättern.

Jedes Strömungsfangblatt (1) des Rotors (2) ist bezüglich seiner Umlaufbahn derart am Rotor angeordnet, daß es einen eigenen, vom jeweils anderen Strömungsfangblatt ungestörten Raum (3) durchläuft.

- 1 -

## Turbine

Die Erfindung betrifft eine Turbine gemäß Oberbegriff des Hauptanspruches. Soweit hier der allgemeine Begriff Turbine gewählt ist, geschieht dies in Rücksicht darauf, daß die erfindungsgemäße Turbine auch in einer Wasserströmung in entsprechender Anpassung anwendbar ist. Der Einfachheit halber wird aber nachfolgend auf den bevorzugten Anwendungsbereich der Ausnutzung bzw. Umsetzung von Windenergie Bezug genommen.

Die als sogenannte Darrieus-Turbine bekannte Bauart hat infolge Windrichtungsunabhängigkeit und geringer Bauhöhe mechanische Vorteile. Jedoch ist der Betriebsbereich infolge kleiner Schnellaufzahlen, die bei ca. 5-7 liegen, wesentlich kleiner als der von Axialturbinen, deren Schnellaufzahlen zwischen 8 und 13 liegen. Die Darrieus-Turbine benötigt immer eine Anlaufhilfe, wobei vorzugsweise als Zusatzrotor ein sogenanntes Savonius-Rad verwendet wird,

das der Darrieus-Turbine die notwendige Anfahrgeschwindigkeit gibt, damit sich eine aerodynamische Auftriebskraft entwickeln kann. Der Anlaufrotor braucht bei überschreiten seiner spezifischen Eigengeschwindigkeit Energie, da sich dann die Turbine in ein Gebläse umkehrt.

Außerdem bekannt ist eine Kombination von Staudruck- und H-Turbine, die selbsttätig bei kleinen Windgeschwindigkeiten anläuft und später, bei Vorhandensein einer Mindestgeschwindigkeit, zur Erzeugung eines aerodynamischen Auftriebes durch eine vorzugsweise Fliehkraftsteuerung den Schwenkbereich reduziert. Diese Bauart bringt eine große Verbesserung zur herkömmlichen Darrieus-Turbine, hat jedoch im Vergleich zu der Axialturbine ebenfalls den Nachteil der geringen Anwendungsbreite.

Turbinen der eingangs genannten Art sind allgemein bekannt, bspw. nach DE-PS 518 733, FR-PS 921 518, US-PS 1 139 1o3.

Bei all diesen Turbinen bemüht man sich um eine optimale Einstellung der Strömungsfangblätter zur Anströmrichtung.

Während einer Umlaufphase ist es aber praktisch unvermeidbar, daß im Gegenlaufbereich zur Windrichtung zumindest ein gewisser Brenneffekt auftritt, der Ursache dafür sein dürfte, daß für das Verhältnis Windgeschwindigkeit zu Umlaufgeschwindigkeit bisher nur Werte in der Größenordnung von etwa 1 : 6 bis maximal 1 : 8 erreicht werden konnten. Die Ursache dafür dürfte auch im wesentlichen mit darin zu suchen sein, daß die Strömungsfangblätter beim Durchlaufen einer Kreisbahn in der Kreisbahn verbleiben und, soweit Verstellungen erfolgen, auch die Vorder und/oder Hinterkanten der Strömungsfangblätter entsprechend versetzte Kreisbahnen durchlaufen.

Hierzu für entsprechende Einstellungen und für günstige Umlaufbahnen zu sorgen ist ohne weiteres möglich. Dabei bleibt aber die Gegebenheit bestehen, daß das Strömungsfangblatt, das die anströmseitig vordere Hälfte der Umlaufbahn durchläuft, die Strömung zwangsläufig für das in der hinteren Hälfte laufende Blatt stört.

Der Erfindung liegt demgemäß die Aufgabe zugrunde, eine Turbine der eingangs genannten Art dahingehend zu verbessern, daß noch günstigere Umsetzungsverhältnisse bezüglich Anströmgeschwindigkeit zur Umlaufgeschwindigkeit erreichbar sein.

- 4 -

Diese Aufgabe ist mit einer Turbine der eingangs genannten Art nach der Erfindung durch das im Kennzeichen des Anspruches 1 Erfaßte gelöst. Vorteilhafte Weiterbildungen ergeben sich nach den Unteransprüchen.

Wesentlich ist hierbei also, von Sturmsicherheitsstellungen abgesehen, auf die noch eingegangen wird, daß jedes Strömungsfangblatt in einem vom anderen Strömungsfangblatt ungestörten bzw. weitgehend ungestörten Luftraum durchlaufen kann, der, je nach Gestaltung des jeweiligen Strömungsfangblattes, im wesentlichen die Form eines Zylinders hat.

Versuche haben gezeigt, daß auf diese Weise Umlaufgeschwindigkeiten erreicht werden können, die praktisch dem 23-fachen der Windgeschwindigkeit entsprechen.

Das Ganze ist natürlich nicht auf die Anordnung von zwei Strömungsfangblättern beschränkt, sondern es können auch mehr als zwei Strömungsfangblätter übereinander an der Turbine vorgesehen werden.

Obgleich jedes Strömungsfangblatt natürlich an einem separeten Rotorarm (mit Gegengewicht) angeordnet werden könnte, wird eine Ausbildung bezüglich Rotorarm/Strömungsfangblatt im Sinne des

- 5 -

Anspruches 2 bevorzugt.

Die erfindungsgemäße Turbine und weitere vorteilhafte Ausbildungsformen werden nachfolgend anhand der zeichnerischen Darstellung von Ausführungsbeispielen näher erläutert.

Es zeigt schematisch

Fig. 1 - 3 die Turbine in bevorzugter Ausführungsform und in verschiedenen Stellungen;

Fig. 4, 5 besondere Ausführungsformen des Strömungsfangblattes und

Fig. 6, 7 eine weitere besondere Ausführungsform der Turbine.

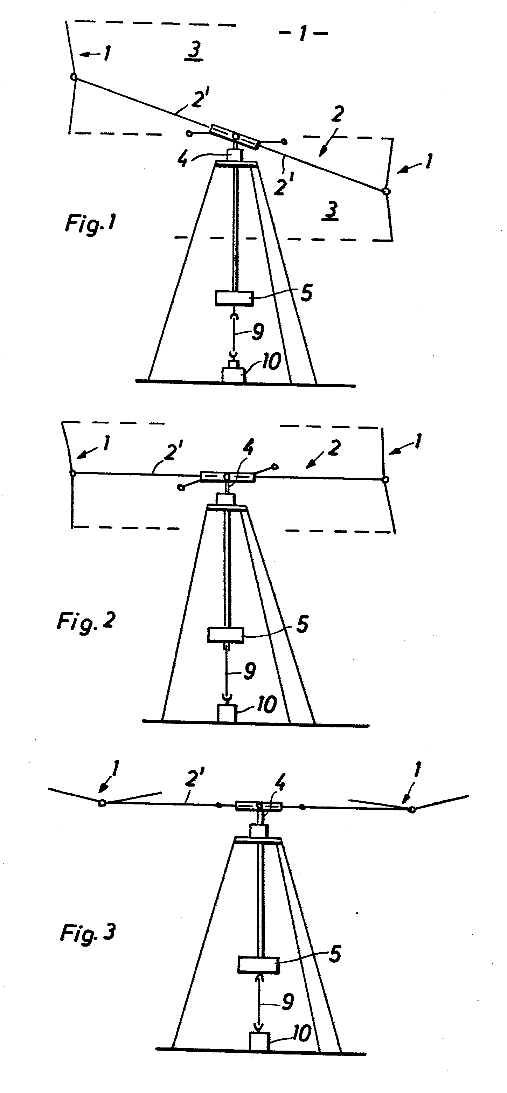

Das Grundprinzip der Turbine ist ohne weiteres aus Fig. 1 erkennbar. Der ganze Rotor 2 besteht aus einem zur Drehachse 4 mittig angeordneten Rotorarm 2', an dessen freien Enden die Strömungsfangblätter 1 angeordnet sind. Der Rotorarm 2' ist zur Drehachse 4 geneigt angeordnet und zwar derart, daß in dieser Stellung jedes der beiden Strömungsfangblätter 1 einen anderen Raum 3 zur Verfügung hat bzw. durchläuft. Dadurch wird erreicht, daß die beiden Blätter 1 in jeder Stellung eine weitgehend vom anderen Blatt ungestörte Strömung durchschneiden. Eine Sturmsicherung ist bei dieser Ausführungsform besonders einfach zu bewerkstelligen, indem nämlich
einfach eine Horizontalstellung des Rotorarmes 2'
(Fig. 2) und eine Kippstellung der Strömungsfangblätter 1 im Sinne der Fig. 3 bewirkt wird.

Für derartige Einstellungen stehen ohne weiteres
geeignete Stellmittel bzw. Verstellelemente zur Verfügung, so daß diese keiner besonderen Erläuterung
bedürfen. Erwähnt sei nur, daß derartige Einstellungen durch Fliehkraftelemente bewirkt werden können.
In Rücksicht auf die erreichbaren hohen Umlaufgeschwindigkeiten und die damit zu fordernde Laufruhe ist es vorteilhaft, die Drehachse 4 in einem Pendellager 4' pendelnd zu lagern und am unteren Ende
der Drehachse ein Rotorgewicht 5 anzuordnen, das
bspw. in Form einer Scheibe ausgebildet ist und bei
entsprechend hohen Drehzahlen die Wirkung eines
Kreisels hat, der für die Stabilisierung des Ganzen
sorgt und insoweit auch für eine weitgehende Konstanz
der Drehzahl.

Wie aus Fig. 1 - 3 erkennbar, kann das untere Ende
der Drehachse 4 bzw. das Rotorgegengewicht 5 mittels
einer Gelenkwelle 9 oder biegsamen Welle mit einem
am Boden angeordneten Generator 1o verbunden sein.

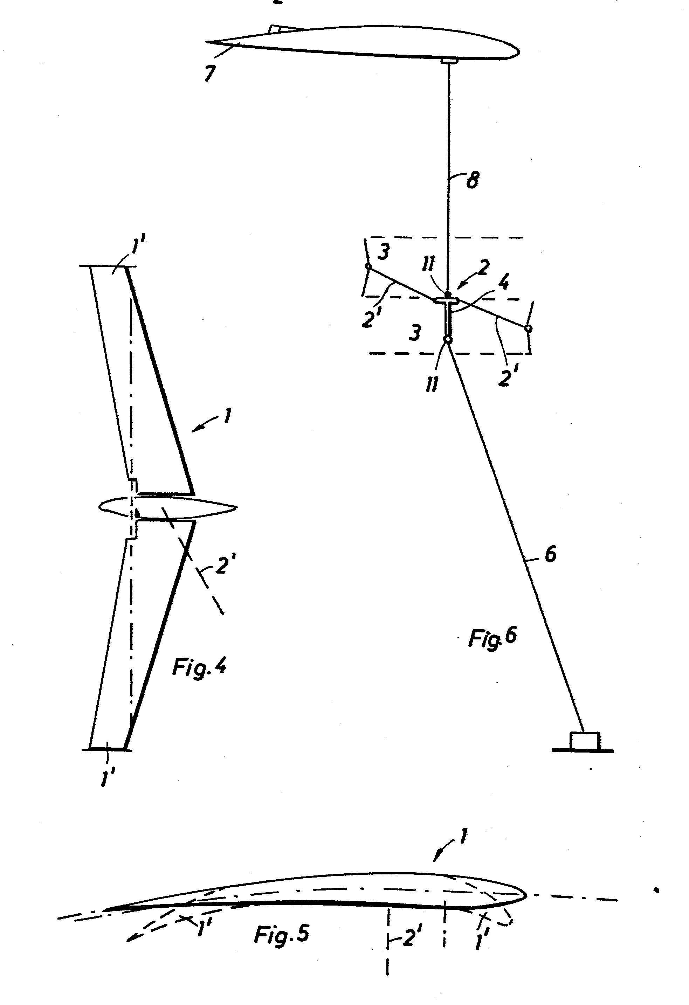

Wie Fig. 6 zeigt, ist die Anordnung der Turbine an
bzw. auf einem Mast (Fig. 1-3) nicht zwingend, sondern
der Rotor 2 kann auch, natürlich unter Zwischenschaltung von Drehanschlüssen 11,

zum Boden hin mit einem Verankerungsseilzug 6 und nach oben mit einem von einem Schwebekörper 7 getragenen Tragseilzug 8 versehen sein.

Als im Sinne einer Steigerung der Umlaufgeschwindigkeit besonders vorteilhaft hat sich eine Strömungsfangblattgestaltung im Sinne der Fig. 4,5 erwiesen, nämlich dahingehend, daß man die freien Enden 1' in Bezug auf die Umlaufrichtung nach vorn anstellt und das Strömungsfangblatt gemäß Fig. 5 derart krümmt, daß der Krümmungsradius im Ansatzbereich am Ende des Rotorarmes 2' größer macht als am freien Ende 1' des Blattes 1.

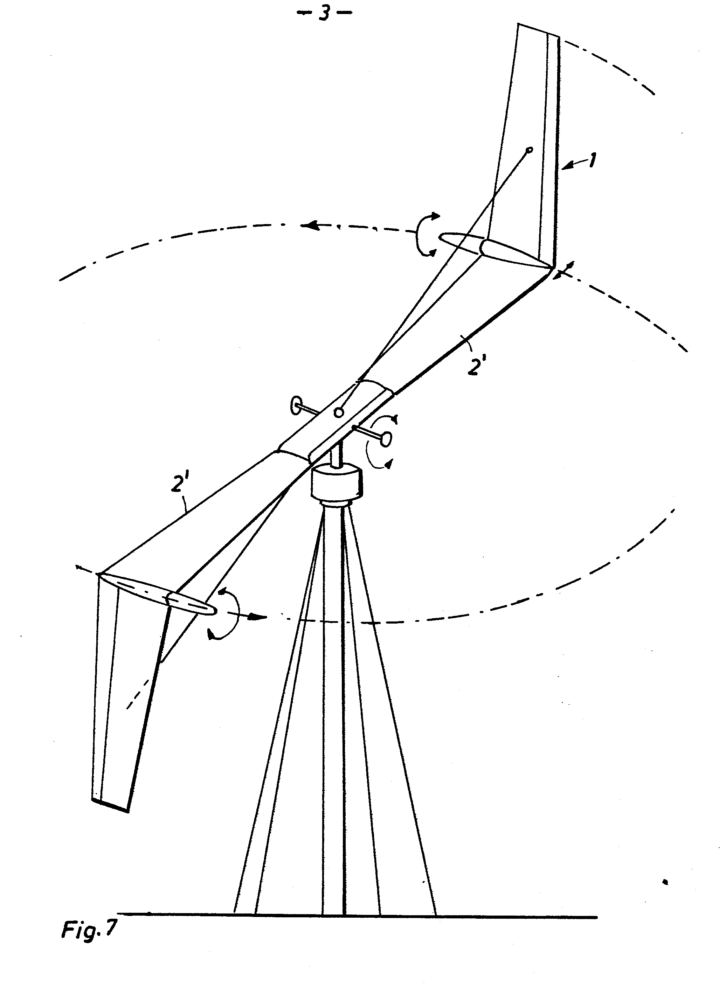

Das Grundprinzip der Turbine kann auch im Sinne der Fig. 7 besonders einfach verwirklicht werden, bei der jeweils eine Hälfte des Rotorarmes 2' und das Strömungsfangblatt 1 gewissermaßen eine aerodynamische Einheit bilden, wobei ebenfalls die Rotorarme und das Strömungsfangblatt durch die Schrägstellung in jeweils anderen Räumen umlaufen. Bei entsprechender Ausbildung der Rotorarme 2' in Form eines Flügelprofiles laufen diese ebenfalls, wie sich gezeigt hat, mit hohen Geschwindigkeiten um und zwar selbst dann, wenn an den Rotorarmen 2' gar keine Strömungsfangblätter 1, wie dargestellt, angeordnet sind, da die Rotorarme 2' dann gewissermaßen selbst die Strömungsfangblätter bilden.

0095600

- 1 -

Patentansprüche:

1. Turbine, insbesondere Windturbine zur Umsetzung
   der Energie einer frei anströmenden Strömung,
   bestehend aus einem um eine vertikale Achse drehbaren Rotor mit Strömungsfangblättern,
   d a d u r c h   g e k e n n z e i c h n e t, daß
   jedes Strömungsfangblatt (1) des Rotors (2) bezüglich seiner Umlaufbahn derart am Rotor angeordnet ist, daß es einen eigenen, vom jeweils anderen
   Strömungsfangblatt ungestörten Raum (3) durchläuft.

2. Turbine nach Anspruch 1, d a d u r c h   g e k e n n-
   z e i c h n e t, daß die Strömungsfangblätter (1)
   an den Enden eines gemeinsamen Rotorarmes (2') angeordnet sind und dieser bezüglich der Drehachse (4)
   schräg gestellt angeordnet ist.

3. Turbine nach Anspruch 2, d a d u r c h   g e k e n n-
   z e i c h n e t, daß der Rotorarm (2') in Bezug
   auf seine Drehachse (4) einstellbar angeordnet ist.

4. Turbine nach Anspruch 2 und/oder 3, d a d u r c h   g e k e n n -
z e i c h n e t , daß die Strömungsfangblätter (1) an den Enden
des Rotorarmes (2' ) kippbar angeordnet sind.

5. Turbine nach Anspruch 1, d a d u r c h   g e k e n n z e i c h -
n e t , daß das Strömungsfangblatt (1) mit einer Flächenkrümmung derart versehen ist, daß der Krümmungsradius im Ansatzbereich am Ende des Rotorarmes größer ist als an den freien
Enden des Blattes (fig. 5).

6. Turbine nach Anspruch 1, d a d u r c h   g e k e n n z e i c h n e t ,
daß die freien Enden (1') des Strömungsblattes (1) in Bezug auf
die Laufrichtung nach vorn angestellt angeordnet sind.

7. Turbine nach Anspruch 1, d a d u r c h   g e k e n n z e i c h -
n e t , daß die Drehachse (4) des Rotors (2) pendelnd gelagert
und am unteren Ende der Achse ein Rotorgegengewicht (5) angeordnet ist.

8. Turbine nach Anspruch 1, d a d u r c h   g e k e n n -
z e i c h n e t, daß der Rotor (2) nach unten mit einem Verankerungsseilzug (6) und nach oben mit einem von einem Schwebekörper (7) getragenen Tragseilzug (8) versehen ist.

9. Turbine nach Anspruch 1, d a d u r c h
   g e k e n n z e i c h n e t, daß die Rotorarme
   (2') des Rotors (2) als Strömungsfangblätter mit
   flügelartiger Querschnittsprofilierung ausgebildet sind.

1o. Turbine nach Anspruch 9, d a d u r c h
    g e k e n n z e i c h n e t, daß die Rotorarme
    (2') an ihren Enden mit Strömungsfangblättern (1)
    versehen und Arme (2') und Blätter (1) als aerodynamische Knickflügeleinheit ausgebildet sind.

                                        (Fig. 7).

Fig. 1

Fig. 2

Fig. 3

Fig. 4

Fig. 5

Fig. 6

— 3 —

Fig. 7

Europäisches
Patentamt

**EUROPÄISCHER RECHERCHENBERICHT**

0095600

Nummer der Anmeldung

EP 83 10 4504

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 916 988 (SIEMENS)<br>* Seite 7, Zeile 24 - Seite 9, Zeile 4 * | 1-3 | F 03 D 3/06 |
| A | GB-A-2 035 468 (DELGADO, HOLMES)<br>* Zusammenfassung * | 4 | |
| A | FR-A-2 295 259 (SIMION)<br>* Seite 1, Zeilen 11-32 * | 7 | |
| A | FR-A- 995 547 (FRANCK)<br>* Anspruch * | 8 | |
| A | DE-A-2 821 899 (HERTER)<br>* Seite 5, Zeilen 5-7 * | 9 | RECHERCHIERTE SACHGEBIETE (Int. Cl. 3)<br><br>F 03 D |

Der vorliegende Recherchenbericht wurde für alle Patentansprüche erstellt.

| Recherchenort<br>DEN HAAG | Abschlußdatum der Recherche<br>01-09-1983 | Prüfer<br>DE WINTER P.E.F. |
|---|---|---|